# EUROPEAN PATENT SPECIFICATION

(11) **EP 0 420 118 B1**
(45) Date of publication and mention of the grant of the patent: **09.11.1994**
(21) Application number: 90118336.8
(22) Date of filing: 24.09.1990
(51) Int. Cl.: C08G 18/70, C08G 18/80, C08L 97/02

(54) **Binder compositions for the manufacture of lignocellulosic composites**
Bindemittelzusammensetzungen zur Herstellung von lignozellulosehaltigen Verbundstoffen
Compositions de liant pour la préparation de composites lignocellulosiques

(30) Priority: 25.09.1989 IT 2181989
(43) Date of publication of application: 03.04.1991
(73) Proprietor: MINISTERO DELL' UNIVERSITA' E DELLA RICERCA SCIENTIFICA E TECNOLOGICA, 00196 Roma (IT)
(72) Inventor: Lepori, Agostino, I-21054 Fagnano Olona, Varese (IT); Moroni, Egidio, I-21053 Castellanza, Varese (IT)
(74) Representative: Weinhold, Peter, Dr.

(56) References cited:
- FR-A- 2 303 661
- GB-A- 2 018 796
- GB-A- 2 075 038

## Description

The present invention relates to binder compositions for essentially lignocellulosic composites and to a process for the preparation thereof.

More particularly, the present invention relates to compositions containing polyisocyanates, in aqueous emulsion, to be used as binders for cellulosic materials, preferably lignocellulosic materials, such as wood, bark, bagasse, straw, bamboo and rice chaff, in form of e.g., granules, chips and fibers, in the manufacture of particle boards or other analogous composite materials, said compositions avoiding adhesion phenomena to pressing plates during the moulding step.

It is known to use polyisocyanates, preferably in the form of aqueous emulsions, to bind composites of lignocellulosic materials as described, for instance, in EP-A-13 112 and IT-A-20027 A/88.

It is also known that the preparation of these composites requires a moulding operation on suitable presses between two heated metal plates.

As is well known, during moulding the polyisocyanic binder, in the absence of suitable interventions, leads to adhesion phenomena of the manufactured articles to the plates of the press, thus causing processing problems.

To overcome this drawback, different solutions have been suggested.

For instance, the use of polyisocyanates together with compounds, such as metal salts of carboxylic acids, which can catalyze the formation of isocyanurates from isocyanates, has been described in US-A-3,870,665.

Another possibility, illustrated by the major part of the patent literature, consists in using "release agents", i.e., additives specifically designed to promote the release of the manufactured articles from the metal plates of the press.

In particular, CA-A-1,123,817 suggests the use of phosphates to be added to the polyisocyanic emulsion, whereas CA-A-1,176,778 suggests the use of a polyisocyanic emulsion containing paraffins and salts of higher fatty acids.

DE-A-2,921,726 proposes the addition of C₉-C₁₈ alkylbenzenesulfonic acids to the polyisocyanic emulsion.

DE-A-3,108,537 describes the use of esters of orthophosphoric acid, while in EP-A-46 014 the use of particular waxes having a melting point lower than 70°C, to be dispersed in the aqueous emulsion or to be applied before or after the binding agent, is disclosed.

US-A-4,257,996 suggests the use of special phosphates or thiophosphates, to be separately added to the polyisocyanic emulsion or to the polyisocyanate before emulsifying it, and US-A-4,100,328 proposes to use a binding agent containing a polyisocyanate mixed with a polyether polyol, having a functionality higher than 2, in a ratio of from 0.5:1 to 1:1.

Finally, according to US-A-4,490,518 2 to 60% of diesters of dicarboxylic acids are to be mixed with the polyisocyanate.

Concerning the modes of addition of the release agent, the following options are reported in the above patent documents: addition to the polyisocyanate, before or after the emulsifying operation ("inner" addition), or direct application onto the lignocellulosic material or onto the plates of the press ("outside" addition).

It is known that the inner addition of the release agent generally causes a decay of the physico-mechanical properties of the composites obtained, and the outside addition involves operational difficulties in industrial plants.

A solution which overcomes the drawbacks of the prior art has been suggested in EP-A-173,866, wherein there is described the use of a binder system containing polyisocyanates not dispersed in water, combined with release agents which consist of the reaction product of a fatty acid containing a high number of carbon atoms and a compound having at least two reactive hydrogen atoms, such as alcohols and amines.

However, the solution suggested in this patent application is not free of drawbacks in that the advantages of the use of the aqueous emulsion cannot be obtained thereby.

These advantages, explained in DE-A-2,538,999 and EP-A-7,532,can be summarized as follows:
- better distribution of the binding agent on the chips and therefore better technological properties of the panel;
- possibility to clean the apparatus with water;
- possibility of working with chips having a variable moisture content.

There has now been found a new class of release agents which allow to overcome the drawbacks of the prior art and to use polyisocyanates dispersed in water.

Therefore, subject matter of the present invention are binder compositions for the preparation of lignocellulosic composites, comprising an aqueous emulsion of one or more polyisocyanates and a release agent comprising at least one modified polyisocyanate of general formula (I):

R(R'O)ₙCONHX (I)

wherein R represents the residue of a C₉-C₁₈ saturated or unsaturated monocarboxylic fatty acid;
R' represents an (iso)alkylene group containing from 2 to 4 carbon atoms;
X represents the residue of a polyisocyanate; and
n is an integer of from 4 to 35.

The polyisocyanates used both in the aqueous emulsion and in the preparation of the release agent are preferably organic compounds having a low, medium and/or high molecular weight and contain at least two NCO groups.

Examples of polyisocyanates having a low molecular weight are those of general formula (II):

OCN-R''-NCO (II)

wherein R'' represents an alkylene, cycloalkylene, arylene or alkylarylene radical containing from 1 to 25 carbon atoms, such as meta and/or para-phenylene diisocyanate, 2,4-toluene diisocyanate, alone or in admixture with the 2,6-toluene diisocyanate isomer, 4,4'-diphenyl-methanediisocyanate, hexamethylenediisocyanate, 4,4'-dicyclohexyl-methane-diisocyanate, 1-isocyanato-3-isocyanato-methyl-3,5,5-trimethylcyclohexane (or isophorone-diisocyanate) and 2,2,4-trimethylhexamethylene diisocyanate mixed with the 2,4,4-trimethylhexamethylene diisocyanate isomer.

Examples of medium- or high-molecular weight polyisocyanates are those having a different condensation degree and which can be obtained by the phosgenation of aniline-formaldehyde condensation products.

These products comprise mixtures of polymethylenepolyphenylpolyisocyanates of general formula (III): 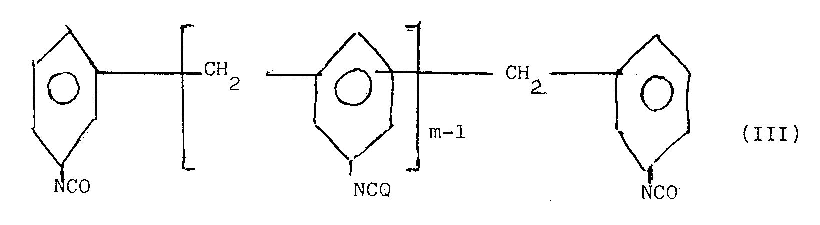
wherein m represents an integer of at least 1.

Particularly preferred polyisocyanates are the mixtures of polymethylenepolyphenylpolyisocyanates having an average functionality of from 2.6 to 2.8; said products are marketed under different trade names, such as "Tedimon® 31" (Montedipe), "PaPi®" (Upjohn), "Mondur® MR" (Mobay) and "Desmodur® 44V20" (Bayer).

Aqueous emulsions of polyisocyanates can be obtained by known techniques, for instance those described in GB-A-1,444,933, EP-A-13 112 and IT-A-20 027 A/88.

Preferred emulsions are those described in the just mentioned patent applications. These emulsions contain at least one cellulose derivative dissolved in water and at least one polyisocyanate.

The cellulose derivative is dissolved in water, at room temperature, in an amount of from 0.1 to 10% b.w., based on the total, preferably in an amount of from 0.5 to 5% b.w., with mechanical stirring.

Cellulose derivatives particularly useful for the preparation of these emulsions are the water-soluble cellulose ethers described in Kirk-Othmer "Encyclopaedia of Chemical Technology", 2nd Edition, Vol.4, page 616; examples of these products are the carboxymethylcelluloses, carboxymethylhydroxyethylcelluloses, hydroxyethylcelluloses, methylcelluloses, methylethylcelluloses and methylhydroxyethylcelluloses.

Particularly preferred cellulose ethers are carboxymethylcelluloses and carboxymethylhydroxyethylcelluloses. More preferred ethers are carboxymethylcelluloses having a degree of substitution of more than 0.5, generally 0.8, the viscosity of the corresponding 2% solution in water, measured by means of a Hoeppler viscosimeter at 20°C, ranging from 10 to 45,000 mPa.s and the pH being at the most 8, generally of from 6 to 8.

To the aqueous solution of the cellulose derivatives the polyisocyanate is added under stirring at room temperature and the system is then stirred with high speed, for instance, at a speed higher than 8,000 rpm, for short periods of time, generally of from 5 to 60 seconds.

The polyisocyanate, optionally already combined with the release agent, can be added to the solution in a quantity of preferably at least 5% b.w., calculated on the total of the finished emulsion; however, it is most preferred to add the polyisocyanate in amounts of from 5 to 60% b.w..

The release agent of the general formula (I) can be obtained by allowing a polyisocyanate as defined above, even of the same type as that used in the aqueous emulsion, to react with an oxy(iso)alkyl hemiester of a C₉-C₁₈ saturated or unsaturated monocarboxylic fatty acid.

Preferably, the reaction is carried out at 50 to 80°C, with equivalent ratios of polyisocyanate to hemiester of 2 or only slightly higher than 2.

The release agent thus obtained may be added, under stirring, to the polyisocyanic emulsion in an amount of at least 10% b.w., calculated on the polyisocyanate, preferably in an amount of from 10 to 35% b.w.

When the polyisocyanate used for the release agent is of the same type as that used in the aqueous emulsion, it is possible to allow the hemiester to directly react with the polyisocyanic mass to be dispersed in water.

Oxy(iso)alkyl hemiesters suitable for preparing the release agent may be obtained, according to known techniques, by esterification of the fatty acid with polyols having a hydroxylic functionality of at least 2 and an average molecular weight of from 200 to 4,000 or are available on the market under different trade names such as, for instance, PEG 200 Monooleate of Akzo.

Examples of suitable monocarboxylic fatty acids are lauric acid, palmitic acid, oleic acid, linoleic acid, linolenic acid and stearic acid.

Examples of suitable polyols are polyoxyethyleneglycols and polyoxypropyleneglycols.

A preferred process for the preparation of the binder compositions of the present invention comprises the preparation of a mixture of the polyisocyanate and the release agent and the subsequent dispersion thereof in water according to known techniques, for instance that described in IT-A-20 027 A/88.

An alternative process foresees the dispersion of the release agent in a polyisocyanic aqueous emulsion already available and prepared according to known techniques, for instance that described in the above IT-A.

Emulsions obtainable according to the present invention can be advantageously used as binders of cellulosic materials, preferably lignocellulosic materials, such as wood, bark, bagasse, straw, bamboo and rice chaff, in form of granulated products, chips, fibers or meals and more generally in the manufacture of particle and boards or other composites such as plywoods, fibre boards and blackboards, without any problems for the industrial operator.

These compositions are generally added to the lignocellulosic material in a quantity of from 2 to 50% b.w. (calculated on the chips), preferably of from 7 to 25% b.w..

These compositions allow a good release of the manufactured articles from the plates of the press. In practice the plates, before starting a molding cycle, are preferably treated with a flushing agent generally available on the market such as, for instance, Trennmittel 4120 of ACMOS-Bremen (Feder. Republic of Germany).

A good release of the manufactured articles from the plates of the press has been observed also by using mixtures of modified and unmodified polyisocyanate emulsions, provided that the quantity of the release agent in the total mixture is kept within the above mentioned ranges.

The following examples are given to illustrate the invention in more detail; however, the scope of the invention is not limited to said examples.

### Example 1 (Preparation of hemiesters of fatty acids)

1a. Into a 1.5 l glass reactor provided with thermometer, agitator, cooler and collecting-separation-recycling column for the distillate, 538 g of stearic acid, 400 g of polyoxypropyleneglycol having a molecular weight of 425 (Polyurax® PPG 425 of BP), 8 g of para-toluenesulfonic acid and 100 g of methylisobutylketone were introduced. The mixture was heated to 160°C and allowed to react for 120 minutes. The methylisobutylketone was removed by distillation in vacuo, cooled to room temperature and discharged.
1b. The operation was carried out as in example 1a, except that 200 g of stearic acid and 650 g of polyoxypropyleneglycol having a molecular weight of 1000 (Polyurax® PPG 1025 of BP) were used.
1c. The operation was carried out as in example 1a, except that 120 g of stearic acid and 770 g of polyoxypropylene glycol having a molecular weight of 2000 (Polyurax® 2025 of BP) were used.
1d. The operation was carried out as in example 1a, except that 400 g of oleic acid and 542 g of polyoxypropylene glycol having a molecular weight of 425 (Polyurax® PPG 425 of BP) were used.
1e. The operation was carried out as in example 1a, except that 300 g of lauric acid and 576 g of polyoxypropylene glycol having a molecular weight of 425 (Polyurax® 425 of BP) were used.
   The properties of the products prepared as described above are reported in Table 1.

**TABLE 1**

| PRODUCT | ACIDITY NUMBER (mg KOH/g) | HYDROXYL NUMBER (mg KOH/g) |
|---|---|---|
| 1a | 4.4 | 67.4 |
| 1b | 5.0 | 31.5 |
| 1c | 4.7 | 12.1 |
| 1d | 3.4 | 74.0 |
| 1e | 4.0 | 78.5 |

### Example 2 (Preparation of mixtures of polyisocyanates and release agents)

2a. A 1.5 l glass reactor provided with agitator, cooler and heating mantle, was charged with 300 g of polymethylenepolyphenylpolyisocyanate (Tedimon® 31 of Montedipe) and 128 g of modified toluene diisocyanate (TDI) (specified in more detail below).
   The components were mixed at 80°C for 10 minutes under a nitrogen stream. Obtained was a product with a free NCO content of 23.6%.
   The modified TDI, having a free NCO content of 4.9%, was obtained by reacting 25.1 g of TDI and 102.8 g of hemiester of example 1a for 6 hours at 80°C and in the presence of 0.1 g of benzoyl chloride.
2b. The operation was carried out as in example 2a, except that 135 g of modified methanediphenyl diisocyanate (MDI), specified in more detail below, were used. Obtained was a product with a free NCO group content of 23.2%.
   The modified MDI, having a free NCO group content of 4.4%, was obtained by reacting 35.1 g of MDI, 99.8 g of hemiester of example 1a and 0.1 g of benzoyl chloride for 6 hours at 80°C.
2c. Into the reactor described in example 2a there were introduced 600 g of Tedimon® 31 and the whole mass was heated to 70°C under stirring. Under a nitrogen stream, 200 g of the hemiester of example 1a were added together with 0.4 g of benzoyl chloride.
   The mixture was allowed to react at 80°C for 90 minutes and thereafter was cooled to room temperature and discharged. Obtained was a product having a content of free NCO groups of 20-21%.
2d. The operation was carried out as in example 2c, except that 200 g of hemiester of example 1b were used.
   The obtained product had a content of free NCO groups of 22.7%.
2e. The operation was carried out as in example 2c, except that 200 g of hemiester of example 1c were used.
   The product obtained had a content of free NCO groups of 22.6%.
2f. The operation was carried out as in example 2c, except that 200 g of hemiester of example 1d were used.
   The product obtained had a content of free NCO groups of 21.9%.
2g. The operation was carried out as in example 2c, except that 200 g of hemiester of example 1e were used.
   The product obtained had a content of free NCO groups of 21.2%.
2h. The operation was carried out as in example 2c, except that 200 g of hemiester of polyoxyethyleneglycol monooleate, having a molecular weight of 200 (PEG 200 Monooleate of Akzo) were used.
   The product obtained had a content of free NCO groups of 21.5%.

### Example 3 (Emulsifying of mixtures of polyisocyanates and release agent)

Into a 1 liter beaker there was introduced an aqueous 1.18% carboxymethylcellulose (CMC) solution. The substitution degree of the CMC was 0.82, the Hoeppler viscosity of the 2% aqueous solution measured at 20°C was 100 mPa.s and the pH was 6.4. Thereafter, under stirring, the autoreleasing polyisocyanates of examples 2a to 2h were added. The quantities are reported in Table 2.

Thereafter a treatment was carried out at high speed (about 10,000 rpm) for 10-20 seconds by means of a turboagitator Ultra Turrax® T 50 having an emulsifying head T 45 N, manufactured by Janke & Kunkel (Federal Republic of Germany).

The content of free NCO groups of the obtained emulsions was from 8 to 8.5% and the viscosity measured at 20°C with a Ford cup having a 4 mm hole was about 20 seconds.

**TABLE 2**

| EMULSIONS | AUTORELEASING POLYISOCYANATE | | CMC SOLUTION (g) |
|---|---|---|---|
| | Type(name of the example) | Quantity (g) | |
| 3a | 2a | 185 | 315 |
| 3b | 2b | 185 | 315 |
| 3c | 2c | 200 | 300 |
| 3d | 2d | 190 | 310 |
| 3e | 2e | 190 | 310 |
| 3f | 2f | 200 | 300 |
| 3g | 2g | 200 | 300 |
| 3h | 2h | 200 | 300 |

### Example 4 (Emulsifying of unmodified polyisocyanate)

The operation was carried out as in example 3, except that 200 g of Tedimon® 31 and 300 g of CMC solution were used. In the emulsion obtained the content of free NCO groups was 11.5% and the viscosity, measured as in the preceding example 3, was 30 seconds.

### Example 5 (Moulding of particle boards on a laboratory press)

5a. Into a resin-applying machine there were introduced 150 g of wood chips of the type industrially used for the external layers of particle boards and having a 5-6% moisture content. Said chips were treated, by means of suitable sprayers, with 40 g of an autoreleasing polyisocyanic emulsion (emulsions of examples 3a to 3h). 125 g of the thus treated chips were introduced in a 120 x 120 mm mould between two steel plates having the same surface area and were moulded at 175°C for 25 s per mm of thickness.
   The moulding operation was repeated 35 times, without any adhesion phenomena of the manufactured articles to the steel plates.
5b. The operation was carried out as in example 5a, except that 40 g of polyisocyanic emulsion, obtained by mixing 53 parts by weight of autoreleasing polyisocyanic emulsion (examples 3a to 3h) with 47 parts by weight of polyisocyanic emulsion without releasing agent (example 4) were used.
   In this case, too, the moulding operation was repeated many times, using the same plates. No adhesion phenomena of the manufactured article could be observed.

### Example 6 (Moulding of particle boards on a pilot press)

A. 3000 g of wood chips, of the type industrially used for the external layers of particle boards and having a 5-6% moisture content were introduced into a pilot resin-applying machine and treated, by means of suitable sprayers, with 800 g of autoreleasing polyisocyanic emulsion of example 3c.
B. The above operation was repeated, using 3000 g of wood chips, of the type industrially used for the inner layers of particle boards and having a 5-6% moisture content. These chips were resinified with 450 g of the polyisocyanic emulsion of example 4.
   On the 550 x 550 mm plate which makes the support of the mattress a layer of 700 g of chips of point A and then 1400 g of chips of point B and again 700 g of chips of point A were placed.
   The mattress was then placed in a press and moulded at 175°C for 15 s/mm of thickness.
   The moulding operation was repeated many times and no adhesion phenomena could be observed.
   The particle boards obtained (16 mm thickness) were in agreement with type V100 of DIN 68763.

## Claims (Claims for the following Contracting State(s): AT, BE, CH, DE, DK, FR, GB, LI, NL, SE)

1. Binder compositions for the preparation of lignocellulosic composites, comprising an aqueous polyisocyanate emulsion and a release agent comprising at least one modified polyisocyanate of general formula (I):
R(R'O)ₙCONHX (I)
wherein R represents the residue of a C₉-C₁₈ saturated or unsaturated monocarboxylic fatty acid;
R' represents an (iso)alkylene group containing from 2 to 4 carbon atoms;
X represents the residue of a polyisocyanate; and
n is an integer of from 4 to 35.

2. Compositions according to claim 1, wherein the polyisocyanates used both in the preparation of the aqueous emulsion and in the preparation of the release agent are selected from compounds of general formula (II):
OCN-R''-NCO (II)
wherein R'' is an alkylene, cycloalkylene, arylene or alkylarylene radical containing from 1 to 25 carbon atoms; and from polymethylene polyphenylisocyanates.

3. Compositions acccording to any one of claims 1 and 2, wherein the release agent of general formula (I) has been obtained by reacting an organic polyisocyanate as defined above, optionally of the same type as that used in the aqueous emulsion, with an oxy(iso)alkyl hemiester of a C₉-C₁₈ saturated or unsaturated monocarboxylic fatty acid.

4. Compositions according to claim 3, wherein the reaction has been carried out at 50 to 80°C, with equivalent ratios of polyisocyanate to hemiester of 2.

5. Compositions according to any one of the preceding claims, wherein the release agent is added to the emulsion in an amount of at least 10% b.w., calculated on the polyisocyanate.

6. Compositions according to any one of the preceding claims, wherein when the polyisocyanate used for the release agent is of the same type as that used in the aqueous emulsion, the hemiester is allowed to react directly with the polyisocyanic mass to be dispersed in water.

7. Process for the preparation of the binder compositions for lignocellulosic composites of any of the preceding claims, which comprises the preparation of a mixture of a polyisocyanate and of the release agent and the subsequent dispersion of said mixture in water.

8. Process for the preparation of the binder compositions for lignocellulosic composites of any one of claims 1 to 6, which comprises the dispersion of the release agent in a polyisocyanic emulsion.

9. Use of the compositions of any one of claims 1 to 6 or obtainable by the processes of claims 7 and 8 as binders for (ligno)cellulosic materials and for the manufacture of particle boards or other composites.

10. Use according to claim 9, wherein the compositions are added to the lignocellulosic material in an amount of from 2 to 50% b.w. calculated on the (ligno)cellulosic materials.

## Claims (Claims for the following Contracting State(s): ES, GR)

1. A process for the manufacture of binder compositions for the preparation of lignocellulosic composites, said compositions comprising an aqueous polyisocyanate emulsion and a release agent, characterized in that the polyisocyanate and the release agent which comprises at least one modified polyisocyanate of general formula (I):
R(R'O)ₙCONHX (I)
wherein R represents the residue of a C₉-C₁₈ saturated or unsaturated monocarboxylic fatty acid;
R' represents an (iso)alkylene group containing from 2 to 4 carbon atoms;
X represents the residue of a polyisocyanate; and
n is an integer of from 4 to 35;
are mixed, and that said mixture is subsequently dispersed in water.

2. The process for the manufacture of the binder compositions of claim 1, characterized in that the release agent is dispersed in a polyisocyanic emulsion.

3. The process according to any one of claims 1 and 2, characterized in that the polyisocyanates used both in the preparation of the aqueous emulsion and in the preparation of the release agent are selected from compounds of general formula (II):
OCN-R''-NCO (II)
wherein R'' is an alkylene, cycloalkylene, arylene or alkylarylene radical containing from 1 to 25 carbon atoms; and from polymethylene polyphenylisocyanates.

4. The process acccording to any one of the preceding claims, characterized in that the release agent of general formula (I) has been obtained by reacting an organic polyisocyanate as defined above, optionally of the same type as that used in the aqueous emulsion, with an oxy(iso)alkyl hemiester of a C₉-C₁₈ saturated or unsaturated monocarboxylic fatty acid.

5. The process according to claim 4, characterized in that the reaction has been carried out at 50 to 80°C, with equivalent ratios of polyisocyanate to hemiester of 2.

6. The process according to any one of the preceding claims, characterized in that the release agent is added to the emulsion in an amount of at least 10% b.w., calculated on the polyisocyanate.

7. The process according to any one of the preceding claims, characterized in that, when the polyisocyanate used for the release agent is of the same type as that used in the aqueous emulsion, the hemiester is allowed to react directly with the polyisocyanic mass to be dispersed in water.

8. Process for use of the compositions obtainable by the processes of any one of the preceding claims, characterized in that they are used as binders for (ligno)cellulosic materials and for the manufacture of particle boards or other composites.

9. The process of use according to claim 8, characterized in that the compositions are added to the lignocellulosic material in an amount of from 2 to 50% b.w. calculated on the (ligno)cellulosic materials.

10. Binder compositions for the preparation of lignocellulosic composites, characterized in that they comprise an aqueous polyisocyanate emulsion and a release agent comprising at least one modified polyisocyanate of general formula (I):
R(R'O)ₙCONHX (I)
wherein R represents the residue of a C₉-C₁₈ saturated or unsaturated monocarboxylic fatty acid;
R' represents an (iso)alkylene group containing from 2 to 4 carbon atoms;
X represents the residue of a polyisocyanate; and
n is an integer of from 4 to 35.

## Patentansprüche (Patentansprüche für folgende(n) Vertragsstaat(en): AT, BE, CH, DE, DK, FR, GB, LI, NL, SE)

1. Bindemittelzusammensetzungen zur Herstellung von lignozellulosehaltigen Verbundstoffen, die eine wässrige Polyisocyanat-Emulsion und ein Trennmittel umfassen, das wenigstens ein modifiziertes Polyisocyanat der allgemeinen Formel (I)
R(R'O)ₙCONHX (I)
umfaßt,
worin R der Rest einer gesättigten oder ungesättigten C₉-C₁₈-Monocarbon-Fettsäure ist;
R' eine (Iso)alkylengruppe mit 2 bis 4 Kohlenstoffatomen bedeutet;
X der Rest eines Polyisocyanats ist und
n eine ganze Zahl von 4 bis 35 darstellt.

2. Zusammensetzungen nach Anspruch 1, worin die sowohl bei der Herstellung der wässrigen Emulsion als auch bei der Herstellung des Trennmittels verwendeten Polyisocyanate ausgewählt werden aus Verbindungen der allgemeinen Formel (II):
OCN-R''-NCO (II)
worin R'' eine Alkylen-, Cycloalkylen-, Arylen- oder Alkylarylengruppe mit 1 bis 25 Kohlenstoffatomen ist;
und aus Polymethylen-polyphenyl-isocyanaten.

3. Zusammensetzungen nach einem der Ansprüche 1 und 2, worin das Trennmittel der allgemeinen Formel (I) erhalten wurde durch Umsetzung eines organischen Polyisocyanats, wie es oben definiert ist, gegebenenfalls vom gleichen Typ wie jenes in der wässrigen Emulsion verwendete, mit einem Oxy(iso)alkyl-Halbester einer gesättigten oder ungesättigten C₉-C₁₈-Monocarbon-Fettsäure.

4. Zusammensetzungen nach Anspruch 3, worin die Umsetzung bei 50 bis 80° und mit einem Äquivalentverhältnis von Polyisocyanat zu Halbester von 2 durchgeführt wurde.

5. Zusammensetzungen nach einem der vorhergehenden Ansprüche, worin das Trennmittel zu der Emulsion in einer Menge von wenigstens 10 Gew.-%, bezogen auf das Polyisocyanat, zugegeben wird.

6. Zusammensetzungen nach einem der vorhergehenden Ansprüche, worin das für das Trennmittel verwendete Polyisocyanat von der gleichen Art ist wie jenes in der wässrigen Emulsion verwendete, wobei man den Halbester sich direkt mit der Polyisocyanat-haltigen Masse umsetzen läßt, die in Wasser dispergiert werden soll.

7. Verfahren zur Herstellung von Bindemittel-Zusammensetzungen für lignozellulosehaltige Verbundstoffe nach einem der vorhergehenden Ansprüche, welches umfaßt: die Herstellung einer Mischung eines Polyisocanats und des Trennmittels und die nachfolgende Disperion der genannten Mischung in Wasser.

8. Verfahren zur Herstellung der Bindemittel-Zusammensetzungen für lignozellulosehaltige Verbundstoffe nach einem der Ansprüche 1 bis 6, welches das Dispergieren des Trennmittels in einer Polyisocyanat-haltigen Emulsion umfaßt.

9. Verwendung der Zusammensetzungen nach einem der Ansprüche 1 bis 6 oder die nach einem der Ansprüche 7 und 8 erhalten werden können, als Bindemittel für (ligno)zellulosehaltige Materialien und zur Herstellung von Spanplatten oder anderen Verbundstoffen.

10. Verwendung nach Anspruch 9, worin die Zusammensetzungen zu dem lignozellulosehaltigen Material in einer Menge von 2 bis 50 Gew.-%, bezogen auf das (ligo)zellulosehaltige Material, zugegeben werden.

## Patentansprüche (Patentansprüche für folgende(n) Vertragsstaat(en): ES, GR)

1. Verfahren zur Herstellung von Bindemittel-Zusammensetzungen zur Herstellung von lignozellulosehaltigen Verbundstoffen, wobei die Zusammensetzung eine wässrige Polyisocyanat-Emulsion und ein Trennmittel umfaßt, dadurch gekennzeichnet, daß das Polyisocyanat und das Trennmittel, das wenigstens ein modifiziertes Polyisocyanat der allgemeinen Formel (I)
R(R'O)ₙCONHX (I)
umfaßt,
worin R der Rest einer gesättigten oder ungesättigten C₉-C₁₈-Monocarbon-Fettsäure ist;
R' eine (Iso)alkylengruppe mit 2 bis 4 Kohlenstoffatomen bedeutet;
X der Rest eines Polyisocyanats ist und
n eine ganze Zahl von 4 bis 35 darstellt,
vermischt werden und daß die genannte Mischung nachfolgend in Wasser dispergiert wird.

2. Verfahren zur Herstellung der Bindemittel-Zusammensetzungen nach Anspruch 1, dadurch gekennzeichnet, daß das Trennmittel in einer Polyisocyanat-haltigen Emulsion dispergiert wird.

3. Verfahren nach einem der Ansprüche 1 und 2, dadurch gekennzeichnet, daß sowohl die bei der Herstellung der wässrigen Emulsion als auch bei der Herstellung des Trennmittels verwendeten Polyisocanate ausgewählt werden aus Verbindungen der allgemeinen Formel (II):
OCN-R''-NCO (II)
worin R'' eine Alkylen-, Cycloalkylen-, Arylen- oder Alkylarylengruppe mit 1 bis 25 Kohlenstoffatomen ist;
und aus Polymethylen-polyphenyl-isocyanaten.

4. Verfahren nach einem der vorhergehenden Ansprüche, dadurch gekennzeichnet, daß das Trennmittel der allgemeinen Formel (I) erhalten wurde durch Umsetzung eines organischen Polyisocyanats, wie es oben definiert ist, gegebenenfalls vom gleichen Typ wie jenes in der wässrigen Emulsion verwendete, mit einem Oxy(iso)alkyl-Halbester einer gesättigten oder ungesättigten Monocarbon-C₉-C₁₈-Fettsäure.

5. Verfahren nach Anspruch 4, dadurch gekennzeichnet, daß die Umsetzung bei 50 bis 80° C und mit einem Äquivalentverhältnis von Polyisocyanat zu Halbester von 2 durchgeführt wird.

6. Verfahren nach einem der vorhergehenden Ansprüche, dadurch gekennzeichnet, daß das Trennmittel zu der Emulsion in einer Menge von wenigstens 10 Gew.-%, bezogen auf das Polyisocyanat, zugegeben wird.

7. Verfahren nach einem der vorhergehenden Ansprüche, dadurch gekennzeichnet, daß - sofern das für das Trennmittel verwendete Polyisocyanat von der gleichen Art ist wie jenes in der wässrigen Emulsion verwendete - man den Halbester sich direkt mit der Polyisocyanat-haltigen Masse umsetzen läßt, die in Wasser dispergiert werden soll.

8. Verfahren zur Verwendung der Zusammensetzungen, erhältlich entsprechend den Verfahren nach einem der vorhergehenden Ansprüche, dadurch gekennzeichnet, daß diese als Bindemittel für (ligo)zellulosehaltige Materialien und zur Herstellung von Spanplatten oder anderen Verbundstoffen verwendet werden.

9. Verfahren zur Verwendung nach Anspruch 8, dadurch gekennzeichnet, daß die Zusammensetzungen zu dem lignozellulosehaltigen Material in einer Menge von 2 bis 50 Gew.-%, bezogen auf das (ligo)zellulosehaltige Material, zugegeben werden.

10. Bindemittelzusammensetzungen zur Herstellung von lignozellulosehaltigen Verbundstoffen, dadurch gekennzeichnet, daß diese eine wässrige Polyisocyanat-Emulsion und ein Trennmittel umfassen, das wenigstens ein modifiziertes Polyisocyanat der allgemeinen Formel (I)
R(R'O)ₙCONHX (I)
umfaßt,
worin R der Rest einer gesättigten oder ungesättigten C₉-C₁₈-Monocarbon-Fettsäure ist;
R' eine (Iso)alkylengruppe mit 2 bis 4 Kohlenstoffatomen bedeutet;
X der Rest eines Polyisocyanats ist und
n eine ganze Zahl von 4 bis 35 darstellt.

## Revendications (Revendications pour l'(les) Etat(s) contractant(s) suivant(s): AT, BE, CH, DE, DK, FR, GB, LI, NL, SE)

1. Compositions de liant pour la préparation de composites lignocellulosiques, comprenant une émulsion aqueuse de polyisocyanate et un agent de démoulage comprenant au moins un polyisocyanate modifié représenté par la formule générale (I):
R(R'O)ₙCOHX (I)
dans laquelle:
R représente le résidu d'un acide gras monocarboxylique saturé ou insaturé en C₉ à C₁₈;
R' représente un groupe (iso)alkylène contenant de 2 à 4 atomes de carbone;
X représente le résidu d'un polyisocyanate; et
n est un entier de 4 à 35.

2. Compositions suivant la revendication 1, dans lesquelles les polyisocyanates utilisés à la fois dans la préparation de l'émulsion aqueuse et dans la préparation de l'agent de démoulage sont choisis parmi des composés représentés par la formule générale (II):
OCN-R''-NCO (II)
dans laquelle:
R'' est un groupe alkylène, cycloalkylène, arylène ou alkylarylène contenant de 1 à 25 atomes de carbone, et parmi des polyméthylène polyphénylisocyanates.

3. Compositions selon l'une quelconque des revendications 1 et 2, dans lesquelles l'agent de démoulage de formule générale (I) est obtenu par réaction d'un polyisocyanate organique tel que défini plus haut, éventuellement du même type que celui qui est utilisé dans l'émulsion aqueuse, avec un hémiester oxy(iso)alkylique d'un acide gras monocarboxylique saturé ou insaturé en C₉ à C₁₈.

4. Compositions suivant la revendication 3, dans lesquelles la réaction est conduite entre 50 et 80°C, avec des rapports équivalents polyisocyanates/hémiester de 2.

5. Compositions selon l'une quelconque des revendications précédentes, dans lesquelles l'agent de démoulage est ajouté à l'émulsion en une quantité d'au moins 10% en poids, calculée par rapport au polyisocyanate.

6. Compositions selon l'une quelconque des revendications précédentes, dans lesquelles, lorsque le polyisocyanate utilisé pour l'agent de démoulage est du même type que celui qui est utilisé dans l'émulsion aqueuse, l'hémiester est laissé à réagir directement avec la masse polyisocyanique à disperser dans l'eau.

7. Procédé pour la préparation des compositions de liant pour des composites lignocellulosiques suivant l'une quelconque des revendications précédentes, qui comprend la préparation d'un mélange d'un polyisocyanate et de l'agent de démoulage et la dispersion ultérieure de ce mélange dans de l'eau.

8. Procédé pour la préparation des compositions de liant pour des composites lignocellulosiques suivant l'une quelconque des revendications 1 à 6, qui comprend la dispersion de l'agent de démoulage dans une émulsion polyisocyanique.

9. Utilisation des compositions selon l'une quelconque des revendications 1 à 6 ou pouvant être obtenues par les procédés suivant les revendications 7 et 8, en tant que liant pour des matériaux (ligno)cellulosiques et pour la fabrication de panneaux de particules ou d'autres composés.

10. Utilisation suivant la revendication 9, dans laquelle les compositions sont ajoutées au matériau lignocellulosique en une quantité comprise entre 2 et 50% en poids, calculée par rapport au matériau lignocellulosique.

## Revendications (Revendications pour l'(les) Etat(s) contractant(s) suivant(s): ES, GR)

1. Procédé pour la fabrication de compositions de liant pour la préparation de composés lignocellulosiques, ces compositions comprenant une émulsion aqueuse de polyisocyanate et un agent de démoulage, caractérisé en ce que le polyisocyanate et l'agent de démoulage qui comprend au moins un polyisocyanate modifié représenté par la formule générale (I):
R(R'O)ₙCONHX (I)
dans laquelle:
R représente le résidu d'un acide gras monocarboxylique saturé ou insaturé en C₉ à C₁₈;
R' représente un groupe (iso)alkylène contenant de 2 à 4 atomes de carbone;
X représente le résidu d'un polyisocyanate; et
n est un entier de 4 à 35,
sont mélangés, et que ce mélange est ensuite dispersé dans de l'eau.

2. Procédé pour la fabrication des compositions de liant suivant la revendication 1, caractérisé en ce que l'agent de démoulage est dispersé dans une émulsion polyisocyanique.

3. Procédé suivant l'une quelconque des revendications 1 et 2, caractérisé en ce que les polyisocyanates utilisés à la fois dans la préparation de l'émulsion aqueuse et dans la préparation de l'agent de démoulage sont sélectionnés parmi les composés représentés par la formule générale (II):
OCN-R''-NCO (II)
dans laquelle:
R'' est un groupe alkylène, cycloalkylène, arylène ou alkylarylène contenant de 1 à 25 atomes de carbone, et parmi des polyméthylène polyphénylisocyanates.

4. Procédé selon l'une quelconque des revendications précédentes, caractérisé en ce que l'agent de démoulage de formule générale (I) est obtenu par réaction d'un polyisocyanate organique tel que défini plus haut, éventuellement du même type que celui qui est utilisé dans l'émulsion aqueuse, avec un hémiester oxy(iso)alkylique d'un acide gras monocarboxylique saturé ou insaturé en C₉ à C₁₈.

5. Procédé suivant la revendication 4, caractérisé en ce que la réaction est conduite entre 50 et 80°C, avec des rapports équivalents polyisocyanates/hémiester de 2.

6. Procédé suivant l'une quelconque des revendications précédentes, caractérisé en ce que l'agent de démoulage est ajouté à l'émulsion en une quantité d'au moins 10% en poids par rapport au polyisocyanate.

7. Procédé suivant l'une quelconque des revendications précédentes, caractérisé en ce que, lorsque le polyisocyanate utilisé pour l'agent de démoulage est du même type que celui qui est utilisé dans l'émulsion aqueuse, l'hémiester est laissé à réagir directement avec la masse polyisocyanique à disperser dans de l'eau.

8. Procédé pour l'utilisation des compositions pouvant être obtenues par les procédés suivant l'une quelconque des revendications précédentes, caractérisé en ce que ces compositions sont utilisées comme liant pour des matériaux lignocellulosiques et pour la fabrication de panneaux de particules ou d'autres composites.

9. Procédé d'utilisation suivant la revendication 8, caractérisé en ce que les compositions sont ajoutées au matériau lignocellulosique en une quantité de 2 à 50% en poids calculée par rapport au matériau lignocellulosique.

10. Compositions de liant pour la préparation de composés lignocellulosiques, caractérisées en ce qu'elles comprennent une émulsion aqueuse de polyisocyanate et un agent de démoulage comprenant au moins un polyisocyanate modifié représenté par la formule générale (I) :
R(R'O)ₙCONHX (I)
dans laquelle:
R représente le résidu d'un acide gras monocarboxylique saturé ou insaturé en C₉ à C₁₈;
R' représente un groupe (iso)alkylène contenant de 2 à 4 atomes de carbone;
X représente le résidu d'un polyisocyanate; et
n est un entier de 4 à 35.
